# EUROPÄISCHE PATENTSCHRIFT

(11) **EP 3 440 978 B1**
(45) Veröffentlichungstag und Bekanntmachung des Hinweises auf die Patenterteilung: **24.11.2021**
(21) Anmeldenummer: 18187222.7
(22) Anmeldetag: 03.08.2018
(51) Int. Cl.: A47L 9/28

(54) **VERFAHREN ZUM BETRIEB EINES SICH SELBSTTÄTIG FORTBEWEGENDEN REINIGUNGSGERÄTES**
METHOD FOR OPERATING A SELF-PROPELLED CLEANING DEVICE
PROCÉDÉ DE FONCTIONNEMENT D'UN APPAREIL DE NETTOYAGE EN MOUVEMENT DE MANIÈRE AUTOMATIQUE

(30) Priorität: 11.08.2017 DE 102017118382
(43) Veröffentlichungstag der Anmeldung: 13.02.2019
(73) Patentinhaber: Vorwerk & Co. Interholding GmbH, 42275 Wuppertal (DE)
(72) Erfinder: Brede, Maike, 58454 Witten (DE); Hahn, Pia, 58332 Schwelm (DE); Hillen, Lorenz, 42287 Wuppertal (DE); Isenberg, Gerhard, 50668 Köln (DE); Windorfer, Harald, 40822 Mettmann (DE)
(74) Vertreter: Müller, Enno

(56) Entgegenhaltungen:
- EP-A1- 1 967 116
- DE-A1-102015 100 419
- JP-A- 2014 180 501
- US-A- 5 613 261
- US-A1- 2012 247 510

## Beschreibung

### Gebiet der Technik

Die Erfindung betrifft ein Verfahren zum Betrieb eines sich selbsttätig innerhalb einer Umgebung fortbewegenden Reinigungsgerätes, wobei das Reinigungsgerät eine Fläche nach einem vorgegebenen Arbeitsplan reinigt, wobei eine Detektionseinrichtung des Reinigungsgerätes Verschmutzungsgrade mehrerer Flächenteilbereiche der Fläche detektiert, wobei ein Reinigungsbetrieb des Reinigungsgerätes in Abhängigkeit von dem Detektionsergebnis variiert wird, wobei aus den Verschmutzungsgraden mehrerer Flächenteilbereiche ein Gesamtverschmutzungsgrad der Fläche ermittelt wird und der Reinigungsbetrieb mit gemäß dem Gesamtverschmutzungsgrad gleichen Reinigungsparametern für die gesamte Fläche ausgeführt wird.

Daneben betrifft die Erfindung ein sich selbsttätig innerhalb einer Umgebung fortbewegendes Reinigungsgerät, welches eine Fläche nach einem vorgegebenen Arbeitsplan reinigt, wobei das Reinigungsgerät eine Detektionseinrichtung zum Detektieren von Verschmutzungsgraden mehrerer Flächenteilbereiche der Fläche und eine Steuereinrichtung zum Steuern eines Reinigungsbetriebs des Reinigungsgerätes in Abhängigkeit von dem Detektionsergebnis der Detektionseinrichtung aufweist, wobei die Steuereinrichtung eingerichtet ist, aus den Verschmutzungsgraden mehrerer Flächenteilbereiche einen Gesamtverschmutzungsgrad der Fläche zu ermitteln und den Reinigungsbetrieb mit gemäß dem Gesamtverschmutzungsgrad gleichen Reinigungsparametern für die gesamte Fläche zu steuern.

### Stand der Technik

Reinigungsgeräte der vorgenannten Art sowie Verfahren zu deren Betrieb sind im Stand der Technik bekannt.

Bei den Reinigungsgeräten kann es sich beispielsweise um mobile Roboter handeln, welche selbständig eine Saugaufgabe und/oder Wischaufgabe ausführen können.

Die Veröffentlichungen DE 10 2011 000 536 A1 und DE 10 2008 014 912 A1 offenbaren beispielsweise Verfahren im Zusammenhang mit selbsttätig verfahrbaren Saug- und/oder Reinigungsrobotern zur Reinigung von Fußböden. Die Roboter sind mit Abstandssensoren ausgestattet, welche Abstände zu Hindernissen, wie beispielsweise Möbelstücken oder Raumbegrenzungen, messen können. Aus den gemessenen Abstandsdaten wird eine Umgebungskarte erstellt, anhand welcher eine Fortbewegungsroute geplant werden kann, die eine Kollision mit Hindernissen vermeidet. Die Abstandssensoren arbeiten bevorzugt berührungslos, beispielsweise mit Hilfe von Licht und/oder Ultraschall. Es ist des Weiteren bekannt, den Roboter mit Mitteln zur Rundum-Abstandsmessung zu versehen, beispielsweise mit einem optischen Triangulationssystem, welches auf einer um eine Vertikalachse rotierenden Plattform oder dergleichen angeordnet ist. Die erfassten Abstandsdaten werden mittels einer Recheneinrichtung des Roboters zu einer Umgebungskarte verarbeitet und gespeichert, so dass im Zuge eines Arbeitsbetriebs auf diese Umgebungskarte zum Zwecke der Orientierung zurückgegriffen werden kann.

Im Stand der Technik ist es des Weiteren bekannt, den Betrieb des Reinigungsgerätes automatisch zu steuern, beispielsweise indem eine Detektionseinrichtung des Reinigungsgerätes Verschmutzungsgrade einer Fläche detektiert und daraufhin einen Reinigungsbetrieb in Abhängigkeit von der detektierten Verschmutzung variiert. Dabei wird jedem Flächenteilbereich der Fläche eine individuelle Verschmutzungsinformation zugeordnet und die zu reinigende Fläche in verschmutzte und weniger verschmutzte Teilbereiche unterteilt, so dass beispielsweise eine Reinigungsintensität individuell in jedem Flächenteilbereich gezielt angepasst werden kann. Derartiges offenbart beispielsweise die Druckschrift US 5 613 261 A.

### Zusammenfassung der Erfindung

Obwohl sich die im Stand der Technik bekannten Lösungen insbesondere für eine intensive Reinigung besonders verschmutzter Flächenteilbereiche bewährt haben, ist es Aufgabe der Erfindung, ein alternatives Betriebsverfahren für eine Reinigung mittels des Reinigungsgerätes zu schaffen, insbesondere für Flächen mit einem geringen Verschmutzungsgrad, beispielsweise aufgrund längerer Abwesenheit eines Nutzers.

Zur Lösung der Aufgabe wird vorgeschlagen, dass der ermittelte Gesamtverschmutzungsgrad durch Aufsummierung der einzelnen Verschmutzungsgrade der mehreren Flächenteilbereiche oder durch Ermitteln eines durchschnittlichen Verschmutzungsgrades mit mindestens einem Referenzverschmutzungsgrad, nämlich einem bei einer zeitlich vorausgehenden Reinigungstätigkeit ermittelten Gesamtverschmutzungsgrad, verglichen wird.

Erfindungsgemäß wird vorgeschlagen, dass der ermittelte Gesamtverschmutzungsgrad mit mindestens einem Referenzverschmutzungsgrad verglichen wird, nämlich einem Gesamtverschmutzungsgrad, der bei einer zeitlich vorausgehenden Reinigungstätigkeit ermittelt wurde. Dadurch kann eine zeitliche Änderung eines Gesamtverschmutzungsgrades festgestellt werden, die beispielsweise auf eine längere Abwesenheit von Personen schließen lässt. Des Weiteren kann das Reinigungsgerät auf eine Datenbank, beispielsweise in Tabellenform, zugreifen, welche für bestimmte Gesamtverschmutzungsgrade definierte Reinigungsparameter enthält. Dabei werden Flächen, welche einen Gesamtverschmutzungsgrad über einem bestimmten Referenzverschmutzungsgrad aufweisen, mit anderen Reinigungsparametern behandelt als Flächen, deren Gesamtverschmutzungsgrad unter dem Referenzverschmutzungsgrad liegt. Es kann eine Vielzahl unterschiedlicher Einstellungen für Reinigungsparameter vorgesehen sein, wobei sich die Anwendungssituationen für die jeweiligen Reinigungsparameter durch vorzugsweise ebenfalls eine Vielzahl von Referenzverschmutzungsgraden definieren.

Der Reinigungsbetrieb erfolgt für alle Flächenteilbereiche der Fläche gleich. Es findet zwar eine Messung des Verschmutzungsgrades innerhalb jedes oder einer Mehrzahl von Flächenteilbereichen der Fläche statt, allerdings wird der Reinigungsbetrieb dann nicht individuell in jedem einzelnen Flächenteilbereich auf den dort jeweils vorherrschenden Verschmutzungsgrad angepasst. Vielmehr wird aus den einzelnen Verschmutzungsgraden der Vielzahl von Flächenteilbereichen ein Gesamtverschmutzungsgrad ermittelt, welcher einen Aufschluss über eine Gesamtverschmutzung der Fläche gibt. Der Gesamtverschmutzungsgrad kann beispielsweise ein durchschnittlicher Verschmutzungsgrad aller Flächenteilbereiche zusammen sein oder auch ein über alle Flächenteilbereiche aufsummierter Verschmutzungsgrad. Grundsätzlich ist es auch möglich, eine Gewichtung des Verschmutzungsgrades vorzunehmen, insbesondere in Abhängigkeit von einer Bodenart, da beispielsweise bei der Reinigung auf einem Teppichboden Fasern des Teppichs als Schmutzpartikel detektiert werden könnten, was den Verschmutzungsgrad fälschlicherweise erhöht. Zur Ermittlung der individuellen Verschmutzungsgrade der Flächenteilbereiche fährt das Reinigungsgerät zunächst über mehrere oder alle Flächenteilbereiche der Fläche und detektiert dort jeweils einen lokalen Verschmutzungsgrad. Der Detektionsvorgang kann beispielsweise während einer reinen Messfahrt des Reinigungsgerätes stattfinden oder auch während eines Reinigungsbetriebs.

Insbesondere wird vorgeschlagen, dass die Verschmutzungsgrade über eine definierte Zeitdauer in mehreren Einzelmessungen detektiert werden. Beispielsweise kann das Reinigungsgerät über eine Zeitdauer von wenigen Minuten innerhalb einer Wohnung umherfahren, wobei Einzelmessungen in unterschiedlichen Räumen oder auch Teilbereichen von Räumen vorgenommen werden. Des Weiteren kann es sich bei der definierten Zeitdauer auch um die gesamte Zeitdauer eines Reinigungsbetriebs des Reinigungsgerätes handeln. Zudem kann es auch vorgesehen sein, die Verschmutzungsgrade der mehreren Flächenteilbereiche über eine längere Zeitdauer von beispielsweise mehreren Tagen oder auch mehreren Wochen zu detektieren, um eine Änderung der Verschmutzungsgrade bzw. des Gesamtverschmutzungsgrades feststellen zu können, die auf eine längere Abwesenheit eines Nutzers schließen lässt. Bei Abwesenheit eines oder mehrerer Nutzer bzw. Bewohner der Wohnung kommt es zwangsläufig zu einer geringeren Verschmutzung innerhalb der Räume, so dass die Häufigkeit eines Reinigungsbetriebs oder auch die Reinigungsintensität der Reinigung auf der gesamten Fläche angepasst werden kann. Beispielsweise könnte eine Reinigungshäufigkeit während einer längeren Abwesenheit, beispielsweise Urlaubszeit, automatisch reduziert werden.

Es wird vorgeschlagen, dass die Verschmutzungsgrade mehrerer Flächenteilbereiche zu einem Gesamtverschmutzungsgrad der Fläche aufsummiert werden. Gemäß dieser Ausgestaltung wird eine Summe aus den Beträgen der einzelnen Verschmutzungsgrade gebildet, welche stellvertretend für den Gesamtverschmutzungsgrad der gesamten Fläche ist. Je höher die einzelnen Verschmutzungsgrade der einzelnen Flächenteilbereiche sind, desto größer ist auch der Gesamtverschmutzungsgrad der Fläche, so dass geeignete Einstellungen für den Reinigungsbetrieb getroffen werden können, um eine möglichst optimale Reinigung jedes einzelnen Flächenteilbereiches zu erreichen.

Grundsätzlich ist die Berechnung eines Gesamtverschmutzungsgrades auch möglich, wenn innerhalb einer Wohnung beispielsweise ein einziger sehr stark verschmutzter Flächenteilbereich existiert, während alle anderen Flächenteilbereiche gar nicht verschmutzt sind oder einen demgegenüber nur sehr geringen Verschmutzungsgrad aufweisen. In dieser Situation kann gegebenenfalls eine separate Nachreinigung des besonders verschmutzten Flächenteilbereiches im Rahmen einer Spotreinigung erfolgen. In der Praxis hat es sich jedoch herausgestellt, dass in den meisten Fällen, insbesondere bei Flächen, auf welchen keine außergewöhnliche Verschmutzung eines Flächenteilbereiches vorliegt, die Berücksichtigung eines Gesamtverschmutzungsgrades ausreicht. Es eignet sich eine Aufsummierung der einzelnen Verschmutzungsgrade mehrerer Flächenteilbereiche oder das Ermitteln eines durchschnittlichen Verschmutzungsgrades in Zeiträumen eines geringen Schmutzaufkommens, beispielsweise bei einer längeren Abwesenheit von Personen und/oder Tieren innerhalb der Räumlichkeiten.

Es wird zudem vorgeschlagen, dass als Reinigungsparameter ein zeitlicher Abstand aufeinanderfolgender Reinigungstätigkeiten geändert wird. Je nach der Höhe des ermittelten Gesamtverschmutzungsgrades kann somit die Reinigungshäufigkeit der Fläche variiert werden. Bei einem hohen detektierten Gesamtverschmutzungsgrad werden geringere Abstände zwischen aufeinanderfolgenden Reinigungstätigkeiten festgelegt als bei demgegenüber niedrigeren Gesamtverschmutzungsgraden. Der zeitliche Abstand der Reinigungstätigkeiten kann wenige Stunden, Tage oder auch Wochen betragen.

Insbesondere wird vorgeschlagen, dass ein zeitlicher Abstand aufeinanderfolgender Reinigungstätigkeiten vergrößert wird, wenn ein ermittelter Gesamtverschmutzungsgrad geringer ist als ein definierter Referenzverschmutzungsgrad. Diese Ausführung eignet sich beispielsweise für den Fall, dass aufgrund einer längeren Abwesenheit von Personen ein nur sehr geringer Gesamtverschmutzungsgrad existiert, welcher beispielsweise nahezu gegen Null geht. Der zeitliche Abstand zwischen den Reinigungstätigkeiten wird dann entsprechend vergrößert, so dass das Reinigungsgerät nicht unnötig umherfährt.

In Abhängigkeit von dem ermittelten Gesamtverschmutzungsgrad kann als Reinigungsparameter des Weiteren eine Reinigungsleistung des Reinigungsgerätes geändert werden. Insbesondere kann die Reinigungsleistung durch eine Einstellung eines Reinigungselementes und/oder eines Gebläses des Reinigungsgerätes angepasst werden. Sofern ein Gesamtverschmutzungsgrad beispielsweise einen definierten Referenzverschmutzungsgrad überschreitet, kann die Reinigungsleistung des Reinigungsgerätes erhöht werden. Die Reinigungsleistung erhöht sich beispielsweise durch eine höhere Drehzahl eines rotierenden Reinigungselementes, welches mechanisch auf die zu reinigende Fläche einwirkt, oder durch Erhöhung einer Saugleistung einer Motor-Gebläse-Einheit des Reinigungsgerätes, welche Sauggut von der Fläche aufsaugt.

Des Weiteren wird vorgeschlagen, dass eine geplante Reinigungstätigkeit zeitlich verzögert wird, wenn der Gesamtverschmutzungsgrad eine Abweichung zu einem früheren, vor oder nach einer zuvor durchgeführten Reinigungstätigkeit ermittelten Gesamtverschmutzungsgrad aufweist, wobei die Abweichung geringer ist als eine definierte Referenzabweichung. Gemäß dieser Ausgestaltung wird ermittelt, wie groß der Betrag einer Abweichung eines errechneten Gesamtverschmutzungsgrades relativ zu einem Referenzverschmutzungsgrad ist. Die Abweichung kann einen positiven oder negativen Wert haben, entsprechend einem höheren oder niedrigeren Gesamtverschmutzungsgrad. Ein aktuell ermittelter Gesamtverschmutzungsgrad wird mit einem zeitlich vorausgehenden Gesamtverschmutzungsgrad verglichen, welcher entweder vor oder nach einer zuletzt durchgeführten Reinigungstätigkeit ermittelt wurde. Sofern die Differenz zwischen den Gesamtverschmutzungsgraden eine definierte Maximalabweichung nicht übersteigt, wird eine fällige Reinigungstätigkeit verschoben. Diese Ausgestaltung eignet sich beispielsweise bei Reinigungstätigkeiten, die durch einen vorgegebenen Arbeitsplan automatisch gesteuert werden. Beispielsweise kann der Arbeitsplan eine Reinigung einer Fläche an jedem zweiten Tag vorsehen. Sofern jedoch vor oder zu dem geplanten Termin ein Gesamtverschmutzungsgrad der Fläche ermittelt wird, welcher darauf schließen lässt, dass nahezu keine Verschmutzung stattgefunden hat, kann der anstehende Reinigungstermin verschoben werden oder ausgelassen werden, so dass in dem vorgenannten Beispiel eine Reinigung der Fläche erst später als geplant erfolgt, nämlich dann, wenn die definierte Referenzabweichung für die Änderung des Gesamtverschmutzungsgrades überschritten wird.

Des Weiteren wird vorgeschlagen, dass ein definierter Referenzverschmutzungsgrad und/oder eine definierte Referenzabweichung eines Gesamtverschmutzungsgrades durch einen Nutzer vorgegeben werden. Insbesondere kann die Übermittlung mittels eines zu dem Reinigungsgerät externen Endgerätes erfolgen, wobei der Nutzer den Referenzverschmutzungsgrad bzw. die definierte Referenzabweichung an dem externen Endgerät eingibt und von dort aus an das Reinigungsgerät übermittelt. Diese manuelle Vorgabe kann beispielsweise mittels einer auf dem externen Endgerät installierten Applikation erfolgen. Das externe Endgerät kann insbesondere ein mobiles Endgerät des Nutzers sein, besonders bevorzugt ein Mobiltelefon, ein Tablet-Computer, ein Laptop oder dergleichen.

Des Weiteren kann vorgesehen sein, dass dem Nutzer sowohl ein Gesamtverschmutzungsgrad der Fläche, als auch Verschmutzungsgrade einzelner Flächenteilbereiche in einer Umgebungskarte angezeigt werden. Die Anzeige des Gesamtverschmutzungsgrades bzw. der einzelnen Verschmutzungsgrade kann besonders bevorzugt auf einem Display eines externen Endgerätes erfolgen, so dass der Nutzer auch bei Abwesenheit eine Information über aktuelle Verschmutzungsgrade in zum Beispiel seiner Wohnung erhalten kann. Des Weiteren wird der Nutzer durch die Anzeige der einzelnen Verschmutzungsgrade der Flächenteilbereiche über eine gegebenenfalls außergewöhnliche Verschmutzung innerhalb eines Flächenteilbereiches informiert, so dass er besondere Maßnahmen, beispielsweise eine Spotreinigung, veranlassen kann, um auch bei einer relativ inhomogenen Verschmutzung der gesamten Fläche eine optimale Reinigung in jedem Flächenteilbereich der Fläche zu erreichen. Durch die grafische Anzeige der Umgebungskarte erhält der Nutzer unmittelbar eine Information darüber, in welchem Flächenteilbereich eine Verschmutzung wie stark ist. Insbesondere kann es auch vorgesehen sein, dass das zur Anzeige verwendete Display ein berührungssensitiver Touchscreen ist, über welchen der Nutzer eine Eingabe tätigen kann, beispielsweise einen Flächenteilbereich markieren kann, in welchem - zusätzlich zu einem Reinigungsbetrieb mit gleichen Reinigungsparametern für die gesamte Fläche - eine besondere Spotreinigung erfolgen soll.

Neben dem zuvor beschriebenen Verfahren wird mit der Erfindung des Weiteren auch ein sich selbsttätig innerhalb einer Umgebung fortbewegendes Reinigungsgerät vorgeschlagen, welches eine Fläche nach einem vorgegebenen Arbeitsplan reinigt, wobei das Reinigungsgerät eine Detektionseinrichtung zum Detektieren von Verschmutzungsgraden mehrerer Flächenteilbereiche der Fläche und eine Steuereinrichtung zum Steuern eines Reinigungsbetriebs des Reinigungsgerätes in Abhängigkeit von dem Detektionsergebnis der Detektionseinrichtung aufweist, und wobei die Steuereinrichtung eingerichtet ist, aus den Verschmutzungsgraden mehrerer Flächenteilbereiche einen Gesamtverschmutzungsgrad der Fläche durch Aufsummierung der einzelnen Verschmutzungsgrade der mehreren Flächenteilbereiche oder durch Ermitteln eines durchschnittlichen Verschmutzungsgrades zu ermitteln und den Reinigungsbetrieb mit gemäß dem Gesamtverschmutzungsgrad gleichen Reinigungsparametern für die gesamte Fläche zu steuern, wobei der ermittelte Gesamtverschmutzungsgrad mit mindestens einem Referenzverschmutzungsgrad, nämlich einem bei einer zeitlich vorausgehenden Reinigungstätigkeit ermittelten Gesamtverschmutzungsgrad, verglichen wird.

Erfindungsgemäß ist das Reinigungsgerät somit mit einer Steuereinrichtung ausgestattet, welche in Verbindung mit der Detektionseinrichtung eingerichtet ist, das Reinigungsgerät zur Ausführung eines zuvor beschriebenen erfindungsgemäßen Verfahrens zu steuern. Dabei ist die Steuereinrichtung befähigt, auf einen oder mehrere gespeicherte Referenzverschmutzungsgrade zuzugreifen, die anzuwendende Reinigungsparameter zur optimalen Reinigung der Fläche definieren. Die Steuereinrichtung ist eingerichtet, einen Algorithmus auszuführen, welcher den Gesamtverschmutzungsgrad der Fläche aus mehreren einzelnen Verschmutzungsgraden einzelner Flächenteilbereiche ermittelt, und den Reinigungsbetrieb des Reinigungsgerätes in Abhängigkeit von dem Gesamtverschmutzungsgrad zu steuern, wobei das Reinigungsgerät in jedem der Flächenteilbereiche mit gleichen Reinigungsparametern gesteuert wird. Die Steuereinrichtung vergleicht den Gesamtverschmutzungsgrad dazu mit vorzugsweise einem oder mehreren Referenzverschmutzungsgraden, welche optimale Reinigungsparameter zur Reinigung von Flächen mit diesen Verschmutzungsgraden definieren. Im Übrigen ergeben sich die Vorteile und Merkmale des erfindungsgemäßen Reinigungsgerätes wie zuvor in Bezug auf das erfindungsgemäße Verfahren beschrieben.

### Kurze Beschreibung der Zeichnungen

Im Folgenden wird die Erfindung anhand von Ausführungsbeispielen näher erläutert. Es zeigen:
- Fig. 1: eine perspektivische Ansicht eines Reinigungsgerätes,
- Fig. 2: eine Umgebungskarte des Reinigungsgerätes mit einer mehrere Flächenteilbereiche aufweisenden Fläche,
- Fig. 3: ein externes Endgerät, auf welchem die Umgebungskarte des Reinigungsgerätes angezeigt wird.

### Beschreibung der Ausführungsformen

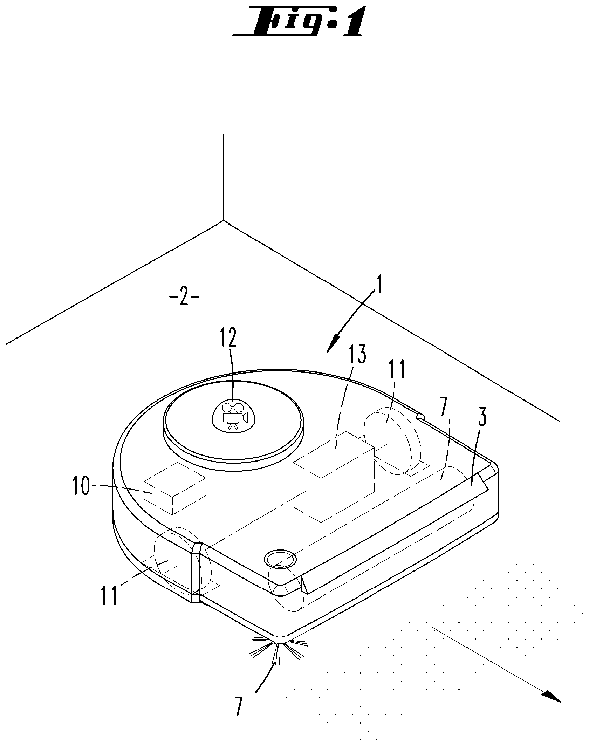

Figur 1 zeigt ein Reinigungsgerät 1, welches hier als Saugroboter ausgestaltet ist. Das Reinigungsgerät 1 verfügt über mittels eines Elektromotors 13 angetriebene Räder 11, mit deren Hilfe sich das Reinigungsgerät 1 innerhalb einer Umgebung, d. h. auf einer zu reinigenden Fläche 2, fortbewegen kann. Des Weiteren verfügt das Reinigungsgerät 1 über Reinigungselemente 7, nämlich hier eine seitlich über ein Gehäuse des Reinigungsgerätes 1 hervorstehende Seitenbürste sowie eine Borstenwalze, welche um eine Rotationsachse rotierbar ist. Die Borstenwalze ist in der hier dargestellten üblichen Betriebsstellung des Reinigungsgerätes 1 bezogen auf ihre Längserstreckung horizontal orientiert, d. h. im Wesentlichen parallel zu der zu reinigenden Fläche 2. Die Reinigungselemente 7 wirken mechanisch auf die zu reinigende Fläche 2 ein und lösen dabei Schmutz von der zu reinigenden Fläche 2. Des Weiteren weist das Reinigungsgerät 1 im Bereich der Reinigungselemente 7 eine nicht weiter dargestellte Saugmundöffnung auf, über welche mittels einer Motor-Gebläse-Einheit mit Sauggut beaufschlagte Luft in das Reinigungsgerät 1 eingesaugt werden kann. Für die Elektroversorgung der einzelnen Elektrokomponenten des Reinigungsgerätes 1, beispielsweise für den Elektromotor 13 der Räder 11, der Reinigungselemente 7 und weitere Elektronik, weist das Reinigungsgerät 1 einen nicht dargestellten, wieder aufladbaren Akkumulator auf.

Das Reinigungsgerät 1 weist darüber hinaus eine Abstandsmesseinrichtung 12 auf, welche hier beispielsweise eine Triangulationsmesseinrichtung beinhaltet. Die Abstandsmesseinrichtung 12 ist innerhalb des Gehäuses des Reinigungsgerätes 1 angeordnet und weist im Einzelnen eine Laserdiode auf, deren emittierter Lichtstrahl über eine Umlenkeinrichtung aus dem Gehäuse herausgeführt und um eine in der gezeigten Orientierung des Reinigungsgerätes 1 senkrechte Drehachse rotierbar ist, insbesondere mit einem Messwinkel von 360 Grad. Dadurch ist eine Rundum-Abstandsmessung um das Reinigungsgerät 1 möglich. Die Abstandsmesseinrichtung 12 misst Abstände zu Hindernissen, beispielsweise Möbelstücken und Raumbegrenzungen, innerhalb der Umgebung des Reinigungsgerätes 1.

Das Reinigungsgerät 1 verfügt zudem über eine Detektionseinrichtung 3, nämlich hier einen in Fahrtrichtung des Reinigungsgerätes 1 vorne angeordneten Staubsensor, welcher eine Verschmutzung eines aktuell von dem Reinigungsgerät befahrenen Flächenteilbereiches 4, 5, 6 der Fläche 2 detektieren kann. Die Detektionseinrichtung 3 ist hier beispielsweise eine (nicht näher dargestellte) Bilderfassungseinrichtung, insbesondere eine Kamera, die Bilder der Fläche 2 aufnimmt und diese mit Bildern einer Referenzverschmutzung vergleicht. Alternativ kann die Detektionseinrichtung 3 jedoch auch auf andere Art und Weise ausgebildet sein. Beispielsweise kann die Detektionseinrichtung 3 einen Partikelsensor aufweisen, welcher einem Saugkanal zugeordnet ist, über welchen die mit Sauggut beaufschlagte Luft in das Reinigungsgerät 1 eingesaugt wird. Das Reinigungsgerät 1 verfügt zudem über eine Steuereinrichtung 10, welche ausgebildet ist, die Detektionseinrichtung 3 zur Detektion von Verschmutzungsgraden innerhalb jedes der Flächenteilbereiche 4, 5, 6 zu steuern, aus den einzelnen Verschmutzungsgraden einen Gesamtverschmutzungsgrad der Fläche 2 zu ermitteln und diesen mit einem oder mehreren Referenzverschmutzungsgraden zu vergleichen und daraufhin das Reinigungsgerät 1 so zu steuern, dass die Fläche 2 insgesamt mit gleichen Reinigungsparametern gereinigt wird, so dass jeder Flächenteilbereich 4, 5, 6 der Fläche 2 auf gleiche Art und Weise und mit vorzugsweiser gleicher Reinigungsintensität gereinigt wird.

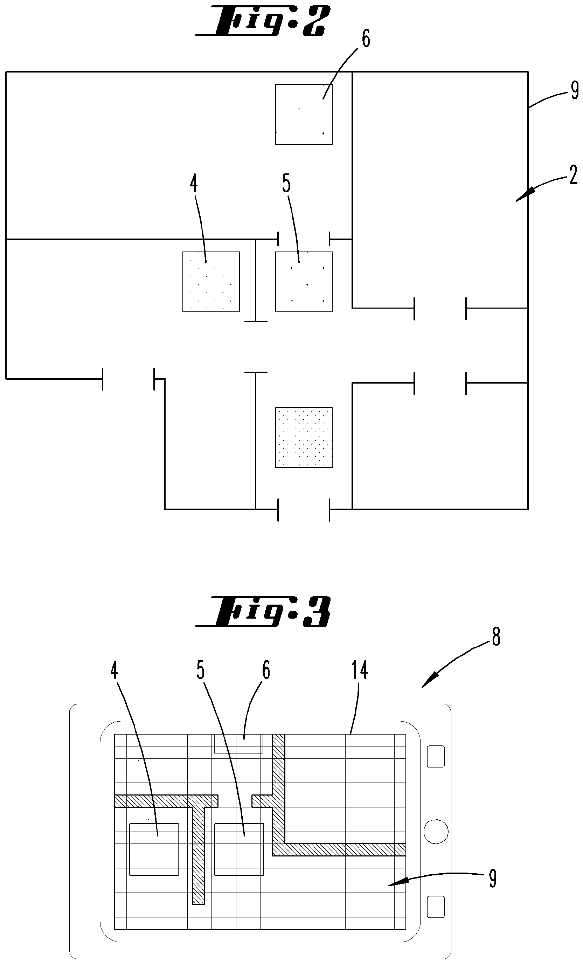

Figur 2 zeigt eine Umgebungskarte 9, welche aus Detektionsergebnissen der Abstandsmesseinrichtung 12 erstellt wurde. Anhand der Umgebungskarte 9 kann sich das Reinigungsgerät 1 während einer selbsttätigen Fortbewegung lokalisieren und unter Vermeidung von Hindernissen fortbewegen. Die Umgebungskarte 9 enthält einen Grundriss einer Wohnung mit mehreren Räumen, welche eine Fläche 2 aufweisen, zu der wiederum einzelne Flächenteilbereiche 4, 5, 6 gehören. Die Umgebungskarte 9 enthält üblicherweise hier nicht weiter dargestellte Hindernisse, insbesondere Möbelstücke und dergleichen, die relevant für die kollisionsfreie Fortbewegung des Reinigungsgerätes 1 sind. Jeder der Flächenteilbereiche 4, 5, 6 der Fläche 2 weist hier einen individuellen Verschmutzungsgrad auf, welcher unter anderem von Aktivitäten abhängt, die Personen oder Tiere innerhalb der Wohnung vornehmen. Des Weiteren kann der Verschmutzungsgrad auch von Pflanzen oder Luftströmungen verursacht sein. Beispielsweise kann ein Verschmutzungsgrad in einer Küche regelmäßig höher sein als ein Verschmutzungsgrad in einem Arbeitszimmer. Die Verschmutzungsgrade der jeweiligen Flächenteilbereiche 4, 5, 6 werden mittels der Detektionseinrichtung 3 des Reinigungsgerätes 1 detektiert, wobei die Detektion entweder während einer Reinigungsfahrt erfolgen kann oder aber im Vorfeld einer Reinigung während einer reinen Erkundungsfahrt. Die von der Detektionseinrichtung 3 detektieren individuellen Verschmutzungsgrade der Flächenteilbereiche 4, 5, 6 werden in die Umgebungskarte 9 eingetragen. Hier weisen die Flächenteilbereiche 5 und 6 beispielsweise eine relativ geringe Verschmutzung auf, während die Verschmutzung in dem Flächenteilbereich 4 demgegenüber stärker ausgeprägt ist.

Figur 3 zeigt ein externes Endgerät 8 mit einem Display 14, auf welchem die Umgebungskarte 9 dargestellt ist. Das externe Endgerät 8 ist hier beispielsweise ein Tablet-Computer, dessen Display 14 ein Touchscreen ist, über welchen gleichzeitig eine Nutzereingabe an das externe Endgerät 8 übermittelt werden kann. Auf dem externen Endgerät 8 ist eine Applikation installiert, welche dem Nutzer eine Steuerung des Reinigungsgerätes 1 aus der Ferne ermöglicht.

Die Erfindung funktioniert nun so, dass das Reinigungsgerät 1 auf der Fläche 2 umherfährt und dabei auf mehreren oder allen Flächenteilbereichen 4, 5, 6 der Fläche 2 eine aktuelle lokale Verschmutzung detektiert. Die Detektionseinrichtung 3 übermittelt die Detektionsergebnisse an die Steuereinrichtung 10, welche daraufhin zunächst die lokalen Verschmutzungsgrade und daraus dann einen Gesamtverschmutzungsgrad für die gesamte Fläche 2 ermittelt. Der Gesamtverschmutzungsgrad kann dabei durch Aufsummierung der einzelnen lokalen Verschmutzungsgrade der Flächenteilbereiche 4, 5, 6 errechnet werden. Alternativ wäre es jedoch auch möglich, einen durchschnittlichen Verschmutzungsgrad zu ermitteln. Die Steuereinrichtung 10 vergleicht den errechneten Gesamtverschmutzungsgrad der Fläche 2 daraufhin mit einem Referenzverschmutzungsgrad, nämlich einem bei einer früheren Reinigungstätigkeit ermittelten Gesamtverschmutzungsgrad, der in einem Speicher des Reinigungsgerätes 1 oder auch einem externen Speicher gespeichert sind. Jedem der gespeicherten Referenzverschmutzungsgrade sind bestimmte Reinigungsparameter des Reinigungsgerätes 1 zugeordnet, welche eine optimale Reinigung einer Fläche 2 mit solchen Verschmutzungsgraden ermöglichen. Ein Reinigungsparameter kann beispielsweise ein bestimmter zeitlicher Abstand zwischen aufeinanderfolgenden Reinigungstätigkeiten des Reinigungsgerätes 1 und/oder eine bestimmte Reinigungsleistung des Reinigungsgerätes 1 sein. Die Reinigungsleistung kann beispielsweise durch eine bestimmte Einstellung eines Reinigungselementes 7 oder eines Gebläses des Reinigungsgerätes 1 erreicht werden. Bei dem Vergleich des ermittelten Gesamtverschmutzungsgrades mit den Referenzverschmutzungsgraden ermittelt die Steuereinrichtung 10 eine Übereinstimmung oder Ähnlichkeit mit einem Referenzverschmutzungsgrad. Daraufhin greift die Steuereinrichtung 10 auf die dem nächstliegenden Referenzverschmutzungsgrad zugeordneten Reinigungsparameter zu und steuert das Reinigungsgerät 1 derart, dass dieses eine Reinigung der gesamten Fläche 2 mit diesen Reinigungsparametern ausführt.

Der Betrieb des Reinigungsgerätes 1 kann des Weiteren beispielsweise in einen Arbeitsplan eingebunden sein, welcher Reinigungstätigkeiten des Reinigungsgerätes 1 zu bestimmten Zeitpunkten oder in wiederkehrenden zeitlichen Abständen vorsieht. Beispielsweise kann eine Standardeinstellung eine tägliche Reinigung der Fläche 2 vorsehen. Vor jedem Reinigungseinsatz kann eine Erkundungsfahrt erfolgen, bei welcher die Detektionseinrichtung 3 des Reinigungsgerätes 1 die aktuellen Verschmutzungen der Flächenteilbereiche 4, 5, 6 detektiert. Ein aus den Detektionsergebnissen ermittelter Gesamtverschmutzungsgrad kann daraufhin mit einem zeitlich vor einer zuletzt ausgeführten Reinigungstätigkeit ermittelten Gesamtverschmutzungsgrad verglichen werden. Falls dabei festgestellt wird, dass der aktuelle Gesamtverschmutzungsgrad geringer ist als der frühere Gesamtverschmutzungsgrad, kann die geplante Reinigungstätigkeit verschoben werden. Insbesondere kann in diesem Zusammenhang eine Referenzabweichung definiert werden, welche eine Referenz für die Differenz der beiden Gesamtverschmutzungsgrade angibt. Sofern der aktuelle Gesamtverschmutzungsgrad innerhalb der Grenzen der definierten Referenzabweichung (+/-) liegt, kann eine Reinigungstätigkeit zeitlich verzögert werden oder ganz entfallen, so dass an dem geplanten Tag gar nicht gereinigt wird, sondern die nächste Reinigungstätigkeit erst an einem drauffolgenden Tag erfolgt, sofern dann die Voraussetzungen dafür gegeben sind.

Der Nutzer kann über sein externes Endgerät 8 über aktuelle Verschmutzungsgrade innerhalb der Flächenteilbereiche 4, 5, 6 sowie auch über den Gesamtverschmutzungsgrad informiert werden. Sofern er dabei feststellt, dass einer der Flächenteilbereiche 4, 5, 6 einen Verschmutzungsgrad aufweist, welcher deutlich von den Verschmutzungsgraden anderer Flächenteilbereiche 4, 5, 6 abweicht, kann er manuell, beispielsweise durch eine manuelle Eingabe auf dem Display 14, eine Spotreinigung des besonders verschmutzten Flächenteilbereiches 4, 5, 6 initiieren. Das externe Endgerät 8 kann des Weiteren auch dazu verwendet werden, frühere Gesamtverschmutzungsgrade als Referenzverschmutzungsgrade oder entsprechende Referenzabweichungen zu definieren und der Steuereinrichtung 10 des Reinigungsgerätes 1 zur Verfügung zu stellen. Somit kann der Nutzer selbst über Schwellwerte entscheiden, die zu einer häufigeren oder weniger häufigen Reinigung, zu einer intensiveren oder weniger intensiven Reinigung oder dergleichen führen.

### Liste der Bezugszeichen

- 1: Reinigungsgerät
- 2: Fläche
- 3: Detektionseinrichtung
- 4: Flächenteilbereich
- 5: Flächenteilbereich
- 6: Flächenteilbereich
- 7: Reinigungselement
- 8: Externes Endgerät
- 9: Umgebungskarte
- 10: Steuereinrichtung
- 11: Rad
- 12: Abstandsmesseinrichtung
- 13: Elektromotor
- 14: Display

## Patentansprüche

1. Verfahren zum Betrieb eines sich selbsttätig innerhalb einer Umgebung fortbewegenden Reinigungsgerätes (1), wobei das Reinigungsgerät (1) eine Fläche (2) nach einem vorgegebenen Arbeitsplan reinigt, wobei eine Detektionseinrichtung (3) des Reinigungsgerätes (1) Verschmutzungsgrade mehrerer Flächenteilbereiche (4, 5, 6) der Fläche (2) detektiert, wobei ein Reinigungsbetrieb des Reinigungsgerätes (1) in Abhängigkeit von dem Detektionsergebnis variiert wird, **dadurch gekennzeichnet, dass** aus den Verschmutzungsgraden mehrerer Flächenteilbereiche (4, 5, 6) ein Gesamtverschmutzungsgrad der Fläche (2) durch Aufsummierung der einzelnen Verschmutzungsgrade der mehreren Flächenteilbereiche (4, 5, 6) oder durch Ermitteln eines durchschnittlichen Verschmutzungsgrades ermittelt wird und der Reinigungsbetrieb mit gemäß dem Gesamtverschmutzungsgrad gleichen Reinigungsparametern für die gesamte Fläche (2) ausgeführt wird, wobei, dass der ermittelte Gesamtverschmutzungsgrad mit mindestens einem Referenzverschmutzungsgrad, nämlich einem bei einer zeitlich vorausgehenden Reinigungstätigkeit ermittelten Gesamtverschmutzungsgrad, verglichen wird.

2. Verfahren nach Anspruch 1, **dadurch gekennzeichnet, dass** die Verschmutzungsgrade über eine definierte Zeitdauer in mehreren Einzelmessungen detektiert werden.

3. Verfahren nach einem der vorhergehenden Ansprüche, **dadurch gekennzeichnet, dass** als Reinigungsparameter ein zeitlicher Abstand aufeinanderfolgender Reinigungstätigkeiten geändert wird, und/oder dass als Reinigungsparameter eine Reinigungsleistung des Reinigungsgerätes (1), insbesondere eine Einstellung eines Reinigungselementes (7) und/oder eines Gebläses des Reinigungsgerätes (1), geändert wird.

4. Verfahren nach einem der vorhergehenden Ansprüche, **dadurch gekennzeichnet, dass** ein zeitlicher Abstand aufeinanderfolgender Reinigungstätigkeiten vergrößert wird, wenn ein ermittelter Gesamtverschmutzungsgrad geringer ist als ein definierter Referenzverschmutzungsgrad.

5. Verfahren nach einem der vorhergehenden Ansprüche, **dadurch gekennzeichnet, dass** eine geplante Reinigungstätigkeit zeitlich verzögert wird, wenn der Gesamtverschmutzungsgrad eine Abweichung zu einem früheren, vor oder nach einer zuvor durchgeführten Reinigungstätigkeit ermittelten Gesamtverschmutzungsgrad aufweist, wobei die Abweichung geringer ist als eine definierte Referenzabweichung.

6. Verfahren nach einem der vorhergehenden Ansprüche, **dadurch gekennzeichnet, dass** ein definierter Referenzverschmutzungsgrad und/oder eine definierte Referenzabweichung eines Gesamtverschmutzungsgrades durch einen Nutzer vorgegeben werden, insbesondere mittels eines zu dem Reinigungsgerät (1) externen Endgerätes (8) von dem Nutzer an das Reinigungsgerät (1) übermittelt werden.

7. Verfahren nach einem der vorhergehenden Ansprüche, **dadurch gekennzeichnet, dass** dem Nutzer sowohl ein Gesamtverschmutzungsgrad der Fläche (2), als auch Verschmutzungsgrade einzelner Flächenteilbereiche (4, 5, 6) in einer Umgebungskarte (9) angezeigt werden.

8. Sich selbsttätig innerhalb einer Umgebung fortbewegendes Reinigungsgerät (1), welches eine Fläche (2) nach einem vorgegebenen Arbeitsplan reinigt, wobei das Reinigungsgerät (1) eine Detektionseinrichtung (3) zum Detektieren von Verschmutzungsgraden mehrerer Flächenteilbereiche (4, 5, 6) der Fläche (2) und eine Steuereinrichtung (10) zum Steuern eines Reinigungsbetriebs des Reinigungsgerätes (1) in Abhängigkeit von dem Detektionsergebnis der Detektionseinrichtung (3) aufweist, **dadurch gekennzeichnet, dass** die Steuereinrichtung (10) eingerichtet ist, aus den Verschmutzungsgraden mehrerer Flächenteilbereiche (4, 5, 6) einen Gesamtverschmutzungsgrad der Fläche (2) durch Aufsummierung der einzelnen Verschmutzungsgrade der mehreren Flächenteilbereiche (4, 5, 6) oder durch Ermitteln eines durchschnittlichen Verschmutzungsgrades zu ermitteln und den Reinigungsbetrieb mit gemäß dem Gesamtverschmutzungsgrad gleichen Reinigungsparametern für die gesamte Fläche (2) zu steuern, wobei der ermittelte Gesamtverschmutzungsgrad mit mindestens einem Referenzverschmutzungsgrad, nämlich einem bei einer zeitlich vorausgehenden Reinigungstätigkeit ermittelten Gesamtverschmutzungsgrad, verglichen wird.

## Claims

1. A method for operating a cleaning device (1) that automatically moves within an environment, wherein the cleaning device (1) cleans a surface (2) according to a prescribed work plan, wherein a detection device (3) of the cleaning device (1) detects contamination levels of several partial surface areas (4, 5, 6) of the surface (2), wherein a cleaning operation of the cleaning device (1) is varied as a function of the detection result, **characterized in that** an overall contamination level is determined for the surface (2) from the contamination levels of several partial surface areas (4, 5, 6) by summing the individual levels of contamination levels of the several partial surface areas (4, 5, 6) or by determining an average contamination level, and the cleaning operation is performed with cleaning parameters identical to the overall contamination level for the entire surface (2), wherein the determined overall contamination level is compared with at least one reference contamination level, specifically with an overall contamination level determined during a chronologically preceding cleaning activity.

2. The method according to claim 1, **characterized in that** the contamination levels are detected over a defined period in several individual measurements.

3. The method according to one of the preceding claims, **characterized in that** the cleaning parameter involves changing the time interval between sequential cleaning activities, and/or that the cleaning parameter involves changing a cleaning power of the cleaning device (1), in particular a setting of a cleaning element (7) and/or a fan of the cleaning device (1).

4. The method according to one of the preceding claims, **characterized in that** a time interval between sequential cleaning activities is increased if a determined overall contamination level is less than a defined reference contamination level.

5. The method according to one of the preceding claims, **characterized in that** a planned cleaning activity is chronologically delayed if the overall contamination level deviates from an earlier overall contamination level determined before or after a previously performed cleaning activity, wherein the deviation is less than a defined reference deviation.

6. The method according to one of the preceding claims, **characterized in that** a user prescribes a defined reference contamination level and/or a defined reference deviation of an overall contamination level, in particular that the user transmits them to the cleaning device (1) via a terminal device (8) external to the cleaning device (1).

7. The method according to one of the preceding claims, **characterized in that** both an overall contamination level of the surface (2) and contamination levels of individual partial surface areas (4, 5, 6) are displayed to the user in an area map (9).

8. A cleaning device (1) that automatically moves within an environment, which cleans a surface (2) according to a prescribed work plan, wherein the cleaning device (1) has a detection device (3) for detecting contamination levels of several partial surface areas (4, 5, 6) of the surface (2) and a control device (10) for controlling a cleaning operation of the cleaning device (1) as a function of the detection result of the detection device (3), **characterized in that** the control device (10) is set up to determine an overall contamination level of the surface (2) from the contamination levels of several partial surface areas (4, 5, 6) by summing the individual levels of contamination levels of the several partial surface areas (4, 5, 6) or by determining an average contamination level, and to control the cleaning operation with cleaning parameters identical to the overall contamination level for the entire surface (2), wherein the determined overall contamination level is compared with at least one reference contamination level, specifically with an overall contamination level determined during a chronologically preceding cleaning activity.

## Revendications

1. Procédé pour faire fonctionner un dispositif de nettoyage (1) qui se déplace automatiquement dans un environnement, dans lequel le dispositif de nettoyage (1) nettoie une surface (2) selon un plan de travail prédéterminé, dans lequel un dispositif de détection (3) du dispositif de nettoyage (1) détecte des degrés de salissure d'une pluralité de zones partielles de surface (4, 5, 6) de la surface (2), dans lequel une opération de nettoyage du dispositif de nettoyage (1) est modifiée en fonction du résultat de la détection, **caractérisé en ce qu'**un degré de salissure global de la surface (2) est déterminé à partir des degrés de salissure d'une pluralité de zones partielles de surface (4, 5, 6) en additionnant les degrés de salissure individuels de la pluralité de zones partielles de surface (4, 5, 6) ou en déterminant un degré de salissure moyen, et l'opération de nettoyage est effectuée avec des paramètres de nettoyage qui sont les mêmes pour la surface entière (2) en fonction du degré de salissure global, dans lequel le degré de salissure global déterminé est comparé à au moins un degré de salissure de référence, à savoir un degré de salissure global déterminé pendant une activité de nettoyage antérieure dans le temps.

2. Procédé selon la revendication 1, **caractérisé en ce que** les degrés de salissure sont détectés sur une période de temps définie par plusieurs mesures individuelles.

3. Procédé selon l'une des revendications précédentes, **caractérisé en ce qu'**un intervalle de temps entre des activités de nettoyage successives est modifié comme paramètre de nettoyage, et/ou **en ce qu'**une performance de nettoyage du dispositif de nettoyage (1), en particulier un réglage d'un élément de nettoyage (7) et/ou d'un souffleur du dispositif de nettoyage (1), est modifiée comme paramètre de nettoyage.

4. Procédé selon l'une des revendications précédentes, **caractérisé en ce qu'**un intervalle de temps entre des activités de nettoyage successives est augmenté si un degré de salissure global déterminé est inférieur à un degré de salissure de référence défini.

5. Procédé selon l'une des revendications précédentes, **caractérisé en ce qu'**une activité de nettoyage programmée est retardée dans le temps si le degré de salissure global présente un écart par rapport à un degré de salissure global précédent déterminé avant ou après une activité de nettoyage précédemment effectuée, ledit écart étant inférieur à un écart de référence défini.

6. Procédé selon l'une des revendications précédentes, **caractérisé en ce qu'**un degré de salissure de référence défini et/ou un écart de référence défini d'un degré de salissure global sont prédéfinis par un utilisateur, en particulier sont transmis par l'utilisateur au dispositif de nettoyage (1) au moyen d'un terminal (8) externe au dispositif de nettoyage (1).

7. Procédé selon l'une des revendications précédentes, **caractérisé en ce qu'**aussi bien un degré de salissure global de la surface (2) que des degrés de salissure de surfaces partielles individuelles (4, 5, 6) sont affichés à l'utilisateur dans une carte de l'environnement (9).

8. Dispositif de nettoyage (1) se déplaçant automatiquement dans un environnement, qui nettoie une surface (2) selon un plan de travail prédéterminé, dans lequel le dispositif de nettoyage (1) comprend un dispositif de détection (3) pour détecter des degrés de salissure d'une pluralité de zones partielles de surface (4, 5, 6) de la surface (2) et un dispositif de commande (10) pour commander une opération de nettoyage du dispositif de nettoyage (1) en fonction du résultat de la détection du dispositif de détection (3), **caractérisé en ce que** le dispositif de commande (10) est conçu pour déterminer un degré de salissure global de la surface (2) à partir des degrés de salissure de plusieurs zones partielles de surface (4, 5, 6) en additionnant les degrés de salissure individuels de plusieurs zones partielles de surface (4, 5, 6) ou en déterminant un degré de salissure moyen et pour commander l'opération de nettoyage avec des paramètres de nettoyage qui sont les mêmes pour toute la surface (2) en fonction du degré de salissure global, dans lequel le degré de salissure global déterminé est comparé à au moins un degré de salissure de référence, à savoir un degré de salissure global déterminé pendant une activité de nettoyage antérieure dans le temps.
